# EUROPÄISCHE PATENTSCHRIFT

(11) **EP 1 520 738 B1**
(45) Veröffentlichungstag und Bekanntmachung des Hinweises auf die Patenterteilung: **22.11.2006**
(21) Anmeldenummer: 04022390.1
(22) Anmeldetag: 21.09.2004
(51) Int. Cl.: B60H 1/34

(54) **Lamellendüse, insbesondere für eine Klimaanlage eines Kraftfahrzeugs**
Air vent with blades, in particular for a vehicle air conditioner
Aerateur à lamelles, en particulier pour climatisation de véhicule

(30) Priorität: 02.10.2003 DE 10346538
(43) Veröffentlichungstag der Anmeldung: 06.04.2005
(73) Patentinhaber: Behr GmbH & Co. KG, 70469 Stuttgart (DE)
(72) Erfinder: Hegner, Hilmar, 71364 Winnenden (DE); Klingler, Dietrich, Dipl.-Ing., 73540 Heubach (DE); Voigt, Klaus, Dipl.-Ing., 74321 Bietigheim-Bissingen (DE)

(56) Entgegenhaltungen:
- EP-A- 0 417 351
- DE-U- 20 210 038
- DE-U- 20 303 569
- FR-A- 2 822 108

## Beschreibung

Die Erfindung betrifft eine Lamellendüse, insbesondere für ein Belüftungssystem eines Kraftfahrzeugs, gemäß dem Oberbegriff des Anspruchs 1.

Aus der EP 1 223 061 A2 ist ein Luft-Ausströmer bekannt mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar ist, in der mindestens ein Teil der Lamellen in zueinander entgegengesetzten Richtungen verschwenkbar ist. Auf diese Weise kann, wenn die zueinander entgegengesetzt verschwenkten Lamellen aufgefächert sind, ein divergierender Luftstrom erzeugt werden, in welchem geringere Strömungsgeschwindigkeiten herrschen als bei einem Luftstrom mit konstantem Querschnitt. Eine derartige Lamellendüse lässt jedoch in Hinblick auf die Anzahl der Teile sowie die Steuerbarkeit noch Wünsche fen.

In der DE 202 10 038 U ist ein Luftaustritt für Belüftungsanlagen in Fahrzeugen, mit einem Gehäuse, das wenigstens einen Luftaustrittskanal aufweist und einem einheitlichen Bedienelement zum Regulieren von Austrittsrichtung und Volumenstrom offenbart. Das Bedienelement ist durch eine um zwei aufeinander senkrechte Achsen drehbare, in dem Gehäuse gelagerte Teilkugel gebildet. Durch Drehung des Bedienelements um die erste der zwei Achsen wird ein erster Satz von bewegungsgekoppelten Lamellen im Luftaustrittskanal verschwenkt. Bei Drehung des Bedienelements um die zweite Achse wird ein zweiter Satz von bewegungsgekoppelten Lamellen im Luftaustrittskanal verschwenkt.

Es ist Aufgabe der Erfindung, eine verbesserte Lamellendüse zur Verfügung zu stellen.

Diese Aufgabe wird gelöst durch eine Lamellendüse mit den Merkmalen des Anspruchs 1. Vorteilhafte Ausgestaltungen sind Gegenstand der Unteransprüche.

Erfindungsgemäß ist eine Lamellendüse mit mindestens einem über einen Antrieb betätigbaren Stellelement zur Regelung eines Luftstroms, insbesondere für ein Belüftungssystem eines Kraftfahrzeugs, vorgesehen, wobei das Stellelement eine Mehrzahl von Lamellen aufweist, und über den Antrieb des Stellelements mindestens ein weiteres Stellelement betätigbar ist. Durch den gemeinsamen Antrieb und eine kinematische Kopplung zwischen dem Antrieb und den Abtrieben, welche insbesondere durch eine Antriebswelle und Abtriebswellen gebildet wird, verringert sich die Anzahl der Bauteile und insbesondere die der Aktuatoren, das heißt der erforderlichen Antriebe.

Die Stellelemente werden mittels einer Getriebeanordnung über eine Antriebswelle und je eine Abtriebswelle angetrieben, wobei die Getriebeanordnung durch ein Zahnradgetriebe gebildet ist, welches mindestens ein an der Antriebswelle angeordnetes Zahnrad und/oder Zahnsegment und ein an der Abtriebswelle angeordnetes Zahnrad und/oder Zahnsegment aufweist. Eine derartige Getriebeanordnung baut relativ klein, so dass nur wenig Bauraum benötigt wird.

Bevorzugt handelt es sich beim weiteren Stellelement um eine Absperr-Klappe, welche den Luftkanal vollständig verschließen kann. Beim weiteren Stellelement kann es sich prinzipiell auch um weitere Lamellen handeln, welche quer und in Luftströmungsrichtung versetzt zu den Lamellen angeordnet sind.

Bevorzugt sind auffächerbare Lamellen vorgesehen, die insbesondere mit Hilfe eines Kurvenbaums einstellbar sind. Dabei können die Lamellen in vertikaler und/oder horizontaler Richtung angeordnet sein. Neben einer aufgefächerten Luftströmung ist bevorzugt auch eine gerichtete seitliche und/oder nach oben oder unten gerichtete Luftströmung möglich, wofür bevorzugt entsprechend stellbare Lamellen vorgesehen sind.

Eine aufgefächerte Luftströmung ist vorzugsweise durch ein nachfolgend angeordnete Absperrklappe drosselbar.

An der Antriebswelle und an der Abtriebswelle der Getriebeanordnung ist vorzugsweise mindestens je ein Rastelement vorgesehen, das ein Verrasten der Abtriebswelle bei sich drehender Antriebswelle ermöglicht.

Hierbei weist das Rastelement bevorzugt ein Scheibensegment auf, wobei das Scheibensegment durch einen scheibenartigen Bereich mit einem vorstehenden Rand über einen Teil des Umfangs, eine Scheibe mit einem kurvenförmigen Ausschnitt oder einen vorstehenden Bereich mit einem gekrümmten, ausschnittsartigen Bereich gebildet sein.

Vorzugsweise ist das Rastelement in axialer Richtung versetzt benachbart zum Zahnrad oder Zahnsegment angeordnet. Bevorzugt sind das Rastelement und das Zahnrad beziehungsweise das Zahnsegment einstückig als Kunststoff-Spritzgussteil ausgebildet. Dies ermöglicht eine einfache und kostengünstige Herstellung.

Bevorzugt wird das Zahnrad und/oder das Zahnsegment und/oder das Rastelement auf die Antriebswelle beziehungsweise die Abtriebswelle gesteckt, wobei eine formschlüssige Verbindung vorgesehen ist, insbesondere ein Vierkant- oder Sechskantprofil. Dies ermöglicht eine optimale Materialpaarung, wobei die Materialien in Hinblick auf die zu erwartenden Belastungen gewählt werden können.

Im Folgenden wird die Erfindung eines Ausführungsbeispiels unter Bezugnahme auf die Zeichnung im Einzelnen erläutert. In der Zeichnung zeigen:
- Fig. 1: eine perspektivische Ansicht einer Lamellendüse gemäß dem Ausführungsbeispiel,
- Fig. 2: eine andere perspektivische Ansicht der Lamellendüse von Fig. 1,
- Fig. 3a-d: verschiedene Stellungen der Lamellendüse von Fig. 1,
- Fig. 4a-c: eine schematische Draufsicht auf einen Fahrzeuginnenraum mit einer Lamellendüse,
- Fig. 5: zwei Diagramme, die den Bewegungsablauf der Lamellendüse von Fig. 1 darstellen,

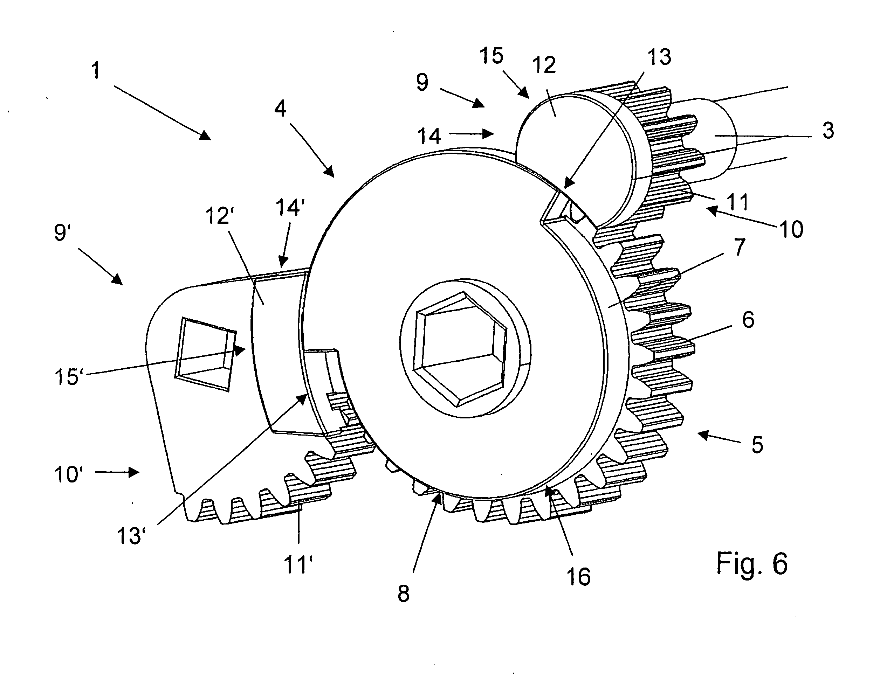

- Fig. 6: eine perspektivische Ansicht einer Getriebeanordnung, wie sie gemäß dem Ausführungsbeispiel verwendet wird,
- Fig. 7a-c: Draufsichten auf verschiedene Stellungen der Getriebeanordnung von Fig. 6, und

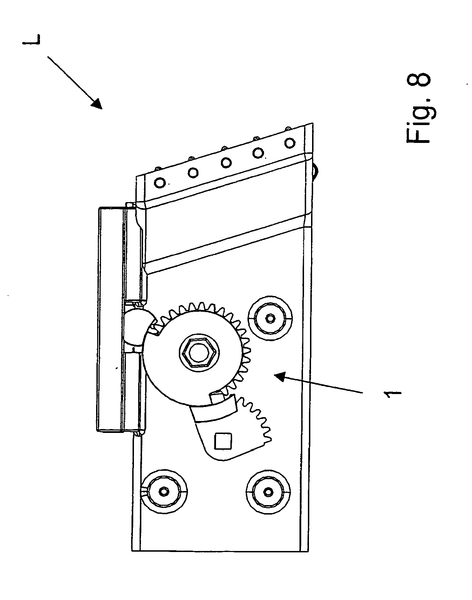

- Fig. 8: eine Seitenansicht der Lamellendüse von Fig. 1 mit der Getriebeanordnung gemäß Fig. 6.

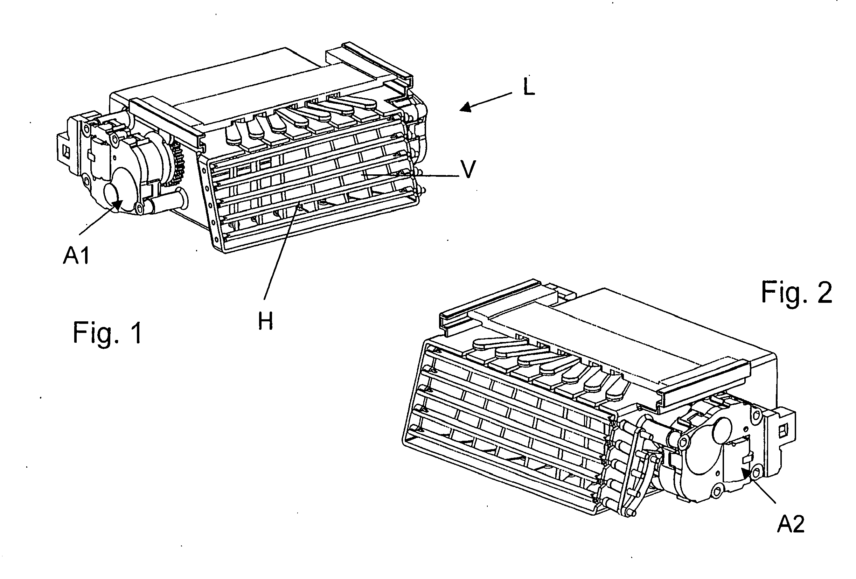

Figuren 1 und 2 zeigen verschiedene perspektivische Ansichten einer Lamellendüse L, welche Teil einer nicht näher dargestellten Klimaanlage ist und die im Armaturenbrett zwischen Fahrer und Beifahrer angeordnet ist. Die Lamellendüse L umfasst eine Absperr-Klappe K, sowie in Kurvenbahnen geführte Horizontal- und Vertikal-Lamellen H beziehungsweise V, welche als betätigbare Stellelemente zur Regelung eines Luftstroms dienen. Vorliegend werden die Vertikal-Lamellen V und die Absperr-Klappe K über einen ersten Aktuator A1 und die Horizontal-Lamellen über einen zweiten Aktuator A2 betätigt.

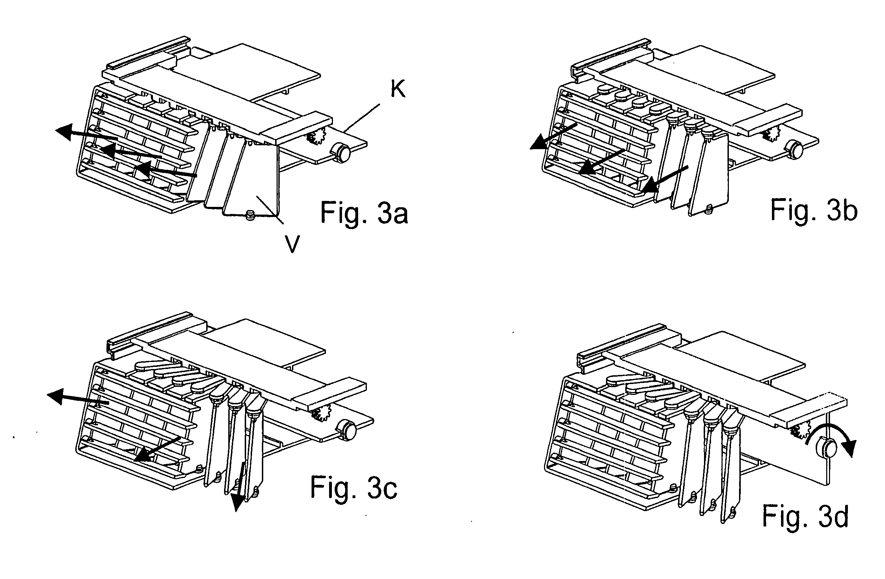

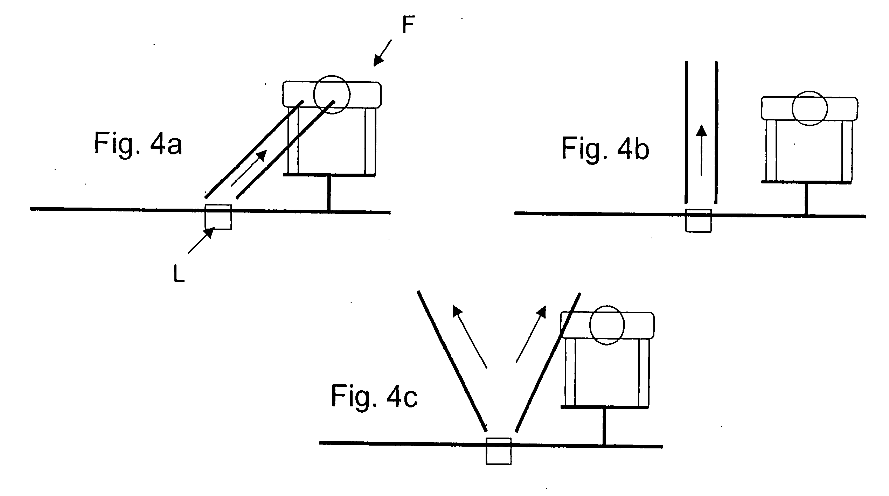

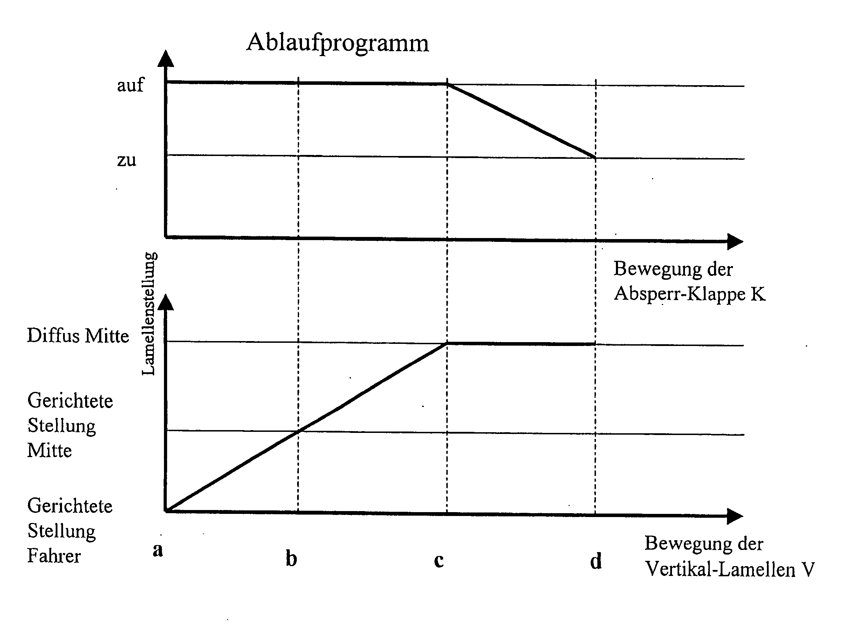

Verschiedene Stellungen der Lamellendüse L sind in den Figuren 3a-d dargestellt. Hierbei zeigt Fig. 3a eine gerichtete Luftströmung zum Fahrer F hin (siehe auch Fig. 4a), Fig. 3b eine gerichtete Luftströmung in Fahrzeuglängsrichtung (siehe auch Fig. 4b), Fig. 3c eine diffuse Luftströmung (siehe auch Fig. 4c) und Fig. 3d eine mittels der Absperr-Klappe K geschlossene Lamellendüse L. In der Fig. 5 ist in zwei Diagrammen übereinander der Bewegungsablauf der Stellbewegungen der Absperr-Klappe K (oben) und der Vertikal-Lamellen V (unten) über den in den Figuren 3a-d dargestellten Stellungen dargestellt. Hierbei werden die Vertikal-Lamellen V von ihrer gerichteten Stellung zum Fahrer F (Position a) in die gerichtete Stellung entlang der Fahrzeuglängsrichtung (Position b) im Wesentlichen einander entsprechend geschwenkt. Für die diffuse Stellung (Position c) werden die Vertikal-Lamellen V aufgefächert, wobei der mittlere Abstand zueinander etwa erhalten bleibt. Anschließend erfolgt nur mehr ein Schließen der Absperr-Klappe K (Position d).

Die Stellbewegungen erfolgen mit Hilfe einer Getriebeanordnung 1, die eine Antriebswelle 2 und zwei Abtriebswellen 3 und 3' aufweist. Auf die Antriebswelle 2 ist mittels eines an einem Ende derselben vorgesehenen Sechskants ein erstes Getriebeelement 4 mit einer entsprechenden Sechskant-Öffnung gesteckt. Das erste Getriebeelement 4 ist ein Kunststoff Spritzgussteil, das ein Zahnsegment 5 mit Zähnen 6 aufweist, das 240° des Umfangs des ersten Getriebeelements 4 einnimmt. Der Kopfkreisdurchmesser des Zahnsegments 5 wird im Folgenden als DZa, der Fußkreisdurchmesser des Zahnsegments 5 wird im Folgenden als DZi bezeichnet. Im Bereich, in dem keine Zähne 6 vorgesehen sind, hat der restliche Umfang des ersten Getriebeelements 4 einen Durchmesser, welcher maximal dem Fußkreisdurchmesser DZi entspricht.

In axialer Richtung versetzt zu dem Zahnsegment 5 ist am ersten Getriebeelement 4 einstückig ausgebildet und direkt benachbart ein scheibenartiger Bereich 7 vorgesehen. Dieser scheibenartige Bereich 7 weist einen Außendurchmesser DSi auf, welcher maximal so groß wie der Fußkreisdurchmesser DZi ist. Im Bereich des Umfangs, in dem keine Zähne 6 vorgesehen sind, weist der scheibenartige Bereich 7 einen Rand auf, der einen Durchmesser DSa hat, welcher minimal so groß ist wie der Kopfkreisdurchmesser DZa des Zahnsegments 5. Im Folgenden wird auf den scheibenartigen Bereich 7 in Verbindung mit seinem Rand auch als erstes Scheibensegment 8 Bezug genommen. Die Scheibendicke ist vorliegend etwa halb so groß wie die Dicke des Zahnsegments 5.

Mit dem Zahnsegment 5 des ersten Getriebeelements 4 kämmt als zweites Getriebeelement 9 ein Zahnrad 10 mit Zähnen 11, welches direkt an der Abtriebswelle 3 vorgesehen ist, beispielsweise mittels Spritzgießen, und eine dem Zahnsegment 5 entsprechende Dicke aufweist. Benachbart zum Zahnrad 10 ist eine Scheibe 12 mit einer dem scheibenartigen Bereich 7 des ersten Getriebeelements 4 entsprechenden Dicke vorgesehen, wobei die Scheibe 12 eine Aussparung 13 aufweist, welche sehnenartig mit einer Krümmung nach innen verläuft, wobei die Krümmung einen Durchmesser aufweist, welcher dem Durchmesser DSa des ersten Getriebeelements 4 entspricht. Auf die Scheibe 12 mit ihrer Aussparung 13 wird im Folgenden auch als zweites Scheibensegment 14 Bezug genommen. Die Scheibe 12 mit ihrer Aussparung 13 wird im Folgenden auf Grund ihrer später erläuterten Funktion im Zusammenspiel mit dem scheibenartigen Bereich 7 und dessen Rand (erstes Scheibensegment 8) werden das zweite Scheibensegment 14 und das erste Scheibensegment 8 als Rastelemente 15 beziehungsweise 16 bezeichnet.

Des Weiteren kämmt mit dem Zahnsegment 5 des ersten Getriebeelements 4 ein als Kunststoff-Spritzgussteil ausgebildetes drittes Getriebeelement 9', das mittels einer Vierkant-Verbindung drehfest auf der mit der Abtriebswelle 3' angeordnet ist. Das dritte Getriebeelement 9' weist über einen Teil seines Umfangs ein Zahnsegment 10' mit Zähnen 11' und über den restlichen Teil seines Umfangs einen Rand 11" mit einem Außendurchmesser, der dem der Zähne 11' entspricht, auf. Das Zahnsegment 10' und der Rand 11" weisen eine dem Zahnsegment 5 entsprechende Dicke auf.

Am nicht mit Zähnen 11' versehenen Bereich des dritten Getriebeelements 9' ist ein vorstehender Bereich 12' mit einer Höhe angebracht, welche der Dicke des scheibenartigen Bereichs 7 entspricht. Der vorstehende Bereich 12' weist im äußeren Bereich einen ausschnittsartigen Bereich 13' mit einer Krümmung auf, welche nach innen verläuft, wobei die Krümmung einen Durchmesser aufweist, welcher dem Durchmesser DSa des ersten Getriebeelements 4 entspricht. Auf den vorstehenden Bereich 12' wird im Folgenden auch als drittes Scheibensegment 14' Bezug genommen. Hierbei entspricht die Funktion des vorstehenden Bereichs 12' mit seinem ausschnittsartigen Bereich 13' dem der Scheibe 12 mit ihrem Ausschnitt 13, so dass hierauf im Folgenden auch als Rastelement 15' Bezug genommen wird.

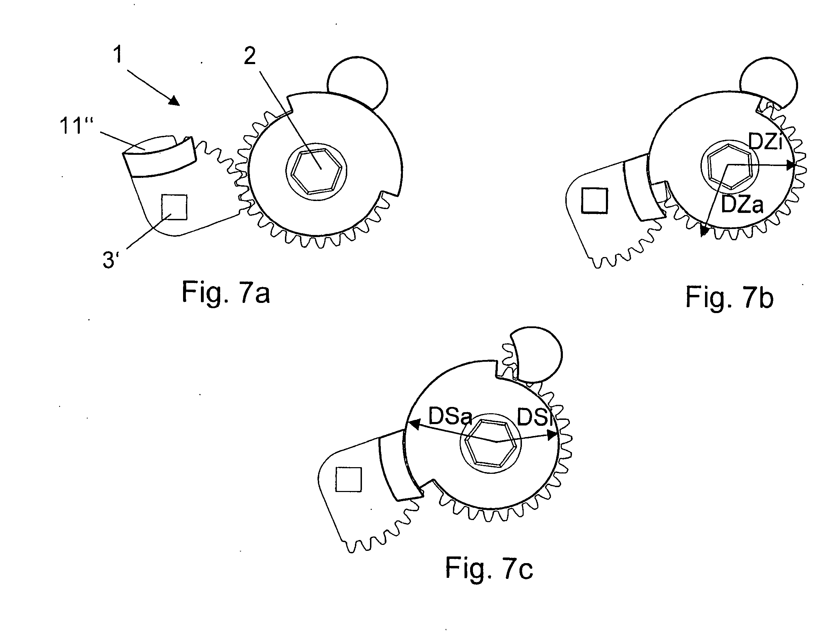

Die Funktion der Getriebeanordnung 1 ist Folgende: Wird aus der Stellung, die in Fig. 7a dargestellt ist und bei der die Abtriebswelle 3 auf Grund des Nichteingriffs des Zahnsegments 5 in das Zahnrad 10 und des Eingriffs des Rastelements 16 in das Rastelement 15 einrastet und die Abtriebswelle 3' auf Grund des Eingriffs des Zahnsegments 5 in das Zahnsegment 10' angetrieben wird, die Antriebswelle 2 entgegen dem Uhrzeigersinn gedreht, so bleibt das Zahnrad 10 des zweiten Getriebeelements 9 bis zum Erreichen der in Fig. 7b dargestellten Stellung außer Eingriff mit dem Zahnsegment 5, und das Rastelement 16 des ersten Getriebeelements 4 gleitet entlang der Aussparung 13, so dass die Abtriebswelle 3 bis zum Erreichen der in Fig. 7b dargestellten Stellung verrastet ist und sich somit das mit der Abtriebswelle 3 verbundene Stellelement nicht dreht. Hingegen greift das Zahnsegment 5 des ersten Getriebeelements 4 in das Zahnsegment des dritten Getriebeelements 9', so dass sich die Abtriebswelle 3' in Uhrzeigersinn dreht, bis die in Fig. 7b dargestellte Stellung erreicht ist.

Wird die Antriebswelle 2 von der in Fig. 7b dargestellten Stellung aus weiter entgegen dem Uhrzeigersinn gedreht, so gelangt das Zahnrad 10 des zweiten Getriebeelements 9 in Eingriff mit dem Zahnsegment 5 des ersten Getriebeelements 4 und beginnt sich zu drehen, wobei gemäß dem dargestellten Ausführungsbeispiel Drehungen von mehr als 360° möglich sind. In Folge der Drehung gelangt das Rastelement 15 außer Eingriff. Dagegen gelangt das Zahnsegment 5 des ersten Getriebeelements 4 außer Eingriff mit dem Zahnsegment 10' des dritten Getriebeelements 9', wobei der Rand des scheibenartigen Bereichs (Rastelement 16) in Anlage an den ausschnittsartigen Bereich 13' des vorstehenden Bereichs 12' des dritten Getriebeelements 9' (Rastelement 15') gelangt, so dass dieses verrastet wird, wie in Fig. 7c dargestellt.

Wird die Drehrichtung der Antriebswelle 2 umgekehrt, das heißt dreht sich die Antriebswelle 2 im Uhrzeigersinn, so gelangt ausgehend von Fig. 7c das Zahnsegment 5 zuerst außer Eingriff mit dem Zahnrad 10 während das Rastelement 16 in Eingriff mit dem Rastelement 15 gelangt, das heißt die Abtriebswelle 3 wird verrastet. Kurz danach (Fig. 7b) gelangt das Zahnsegment 5 in Eingriff mit dem Zahnsegment 10', das heißt die Abtriebswelle 3' wird angetrieben.

Gemäß dem vorliegenden Ausführungsbeispiel dient die Abtriebswelle 3 der Betätigung der Vertikal-Lamellen V und die Abtriebswelle 3' der Betätigung der Absperr-Klappe K der Lamellendüse L. Über die Antriebswelle 3 können zusätzlich weitere Stellelemente, wie beispielsweise die Horizontal-Lamellen H betätigt werden, vorliegend ist jedoch hierfür ein getrennt ausgebildeter Antrieb (Aktuator A2) vorgesehen.

### Bezugszeichenliste

1 Getriebeanordnung
2 Antriebswelle
3, 3'Abtriebswelle
4 erstes Getriebeelement
5 Zahnsegment
6 Zahn
7 scheibenartiger Bereich
8 erstes Scheibensegment
9 zweites Getriebeelement
9' drittes Getriebeelement
10 Zahnrad
10' Zahnsegment
11, 11' Zahn
11 " Rand
12 Scheibe
12' vorstehender Bereich
13 Aussparung
13' ausschnittsartiger Bereich
14, 14' Scheibensegment
15, 15' Rastelement
16 Rastelement
A1 erster Aktuator
A2 zweiter Aktuator
DSa Außendurchmesser scheibenartiger Bereich im Bereich des Randes
DSi Außendurchmesser scheibenartiger Bereich
DZa Kopfdurchmesser des Zahnsegments
DZi Fußkreisdurchmesser des Zahnsegments
F Fahrer
H Horizontal-Lamelle
K Absperr-Klappe
L Lamellendüse
V Vertikal-Lamelle

## Patentansprüche

1. Lamellendüse mit mindestens einem über einen Antrieb betätigbaren Stellelement zur Regelung eines Luftstroms, insbesondere für ein Belüftungssystem eines Kraftfahrzeugs, wobei das Stellelement eine Mehrzahl von Lamellen (H oder V) aufweist, wobei über den Antrieb des Stellelements mindestens ein weiteres Stellelement (V bzw. H oder K) betätigbar ist, **dadurch gekennzeichnet, dass** die Stellelemente (H, V, K) mittels einer Getriebeanordnung (1) über eine Antriebswelle (2) und je eine Abtriebswelle (3, 3') angetrieben sind, wobei die Getriebeanordnung (1) durch ein Zahnradgetriebe gebildet ist, welches mindestens ein an der Antriebswelle (2) angeordnetes Zahnrad und/oder Zahnsegment (5) und ein an der Abtriebswelle (3, 3') angeordnetes Zahnrad (10) und/oder Zahnsegment (10') aufweist

2. Lamellendüse nach Anspruch 1, **dadurch gekennzeichnet, dass** das weitere Stellelement eine Absperr-Klappe (K) ist.

3. Lamellendüse nach Anspruch 1 oder 2, **dadurch gekennzeichnet, dass** das weitere Stellelement weitere Lamellen (V bzw. H) sind, welche quer und in Luftströmungsrichtung versetzt zu den Lamellen (H oder V) angeordnet sind.

4. Lamellendüse nach einem der vorhergehenden Ansprüche, **dadurch gekennzeichnet, dass** zumindest ein Teil der Lamellen (V) auffächerbar ist.

5. Lamellendüse nach Anspruch 4, **dadurch gekennzeichnet, dass** eine Absperrklappe vorgesehen ist, mit deren Hilfe die aufgefächerte Luft gedrosselt werden kann.

6. Lamellendüse nach einem der vorhergehenden Ansprüche, **dadurch gekennzeichnet, dass** an der Antriebswelle (2) und an der Abtriebswelle (3, 3') mindestens je ein Rastelement (16, 15, 15') vorgesehen ist, das ein Verrasten der Abtriebswelle (3, 3') bei sich drehender Antriebswelle (2) ermöglicht.

7. Lamellendüse nach Anspruch 6, **dadurch gekennzeichnet, dass** das Rastelement (16, 15, 15') ein Scheibensegment (8, 14, 14') aufweist.

8. Lamellendüse nach Anspruch 6 oder 7, **dadurch gekennzeichnet, dass** das Rastelement (16, 15, 15') in axialer Richtung versetzt zum Zahnrad (10) oder Zahnsegment (5, 10') angeordnet ist.

9. Lamellendüse nach einem der Ansprüche 6 bis 8, **dadurch gekennzeichnet, dass** das Rastelement (16) einen scheibenartigen Bereich (7) mit einem über einen Teil des Umfangs überstehenden Rand aufweist.

10. Lamellendüse nach Anspruch 9, **dadurch gekennzeichnet, dass** das Rastelement (16) an der Antriebswelle (2) angeordnet ist.

11. Lamellendüse nach einem der Ansprüche 6 bis 10, **dadurch gekennzeichnet, dass** das Rastelement (15) eine Scheibe (12) mit einem Ausschnitt (13) aufweist, wobei der Ausschnitt (13) zum Mittelpunkt der Scheibe (12) gekrümmt ist.

12. Lamellendüse nach einem der Ansprüche 6 bis 11, **dadurch gekennzeichnet, dass** das Rastelement (15') einen vorstehenden Bereich (12') mit einem gekrümmten ausschnittsartigen Bereich (13') aufweist.

13. Lamellendüse nach Anspruch 11 oder 12, **dadurch gekennzeichnet, dass** das Rastelement (15, 15') an der Abtriebswelle (3, 3') angeordnet ist.

14. Lamellendüse nach einem der Ansprüche 6 bis 13, **dadurch gekennzeichnet, dass** das Zahnrad (10) und/oder das Zahnsegment (5, 10') und/oder das Rastelement (16, 15, 15') ein Kunststoff-Spritzgussteil ist.

15. Lamellendüse nach einem der Ansprüche 6 bis 14, **dadurch gekennzeichnet, dass** das Zahnrad (10) und/oder das Zahnsegment (5; 10') einstückig mit dem Rastelement (16, 15, 15') ausgebildet ist.

16. Lamellendüse nach einem der Ansprüche 6 bis 15, **dadurch gekennzeichnet, dass** das Zahnrad und/oder das Zahnsegment (5, 10') und/oder das Rastelement (16, 15') auf die Antriebswelle (2) beziehungsweise die Abtriebswelle (3') gesteckt ist, wobei eine formschlüssige Verbindung vorgesehen ist.

17. Belüftungssystem, insbesondere für ein Kraftfahrzeug, **gekennzeichnet durch** eine Lamellendüse (L) gemäß einem der Ansprüche 1 bis 16.

## Claims

1. An air vent with blades having at least one actuating element which can be actuated by a drive unit for controlling a flow of air, in particular for a ventilation system in a motor vehicle, the actuating element having a plurality of blades (H or V) and it being possible to actuate at least one further actuating element (V/H or K) using the drive device of the actuating element,
**characterised in that**
the actuating elements (H, V, K) are drive by means of a gearing arrangement (1) via a drive shaft (2) and a driven shaft (3, 3'), the gearing arrangement (1) taking the form of a toothed gearing which has at least one toothed gear and/or toothed segment (5) positioned on the drive shaft (2) and a toothed gear (10) and/or toothed segment (10') positioned on the driven shaft (3, 3').

2. An air vent with blades in accordance with claim 1,
**characterised in that**
the further actuating element is a butterfly valve (K).

3. An air vent with blades in accordance with claim 1 or 2,
**characterised in that**
the further actuating element is further blades (V/H) which are positioned at right angles to and offset in the direction of air flow in relation to the blade (H or V).

4. An air vent with blades in accordance with one of the preceding claims,
**characterised in that**
at least some of the blades (V) can be fanned out.

5. An air vent with blades in accordance with claim 4,
**characterised in that**
a butterfly valve (K) is provided which can be used to throttle the fanned out air.

6. An air vent with blades in accordance with one of the preceding claims,
**characterised in that**
provided on both the drive shaft (2) and on the driven shaft (3, 3') is at least one locking element (16, 15, 15') which enables the driven shaft (3, 3') to lock in place when the drive shaft (2) is rotating.

7. An air vent with blades in accordance with claim 6,
**characterised in that**
the locking element (16, 15, 15') has a disc segment (8, 14, 14').

8. An air vent with blades in accordance with claim 6 or 7,
**characterised in that**
the locking element (16, 15, 15') is positioned offset axially in relation to the toothed wheel (10) or toothed segment (5, 10').

9. An air vent with blades in accordance with one of claims 6 to 8,
**characterised in that**
the locking element (16) has a disk-like area (7) with an edge which projects over part of the periphery.

10. An air vent with blades in accordance with claim 9,
**characterised in that**
the locking element (16) is positioned on the drive shaft (2).

11. An air vent with blades in accordance with one of claims 6 to 10,
**characterised in that**
the locking element (15) has a disc with a cut-out (13), the cut-out (13) being curved towards the centre of the disc (13).

12. An air vent with blades in accordance with one of claims 6 to 11,
**characterised in that**
the locking element (15') has a projecting area (12') with a curved area (13') in the manner of a cut-out.

13. An air vent with blades in accordance with claim 11 or 12,
**characterised in that**
the locking element (15, 15') is positioned on the driven shaft (3, 3').

14. An air vent with blades in accordance with one of claims 6 to 13,
**characterised in that**
the toothed gear (10) and/or the toothed segment (5, 10') and/or the locking element (16, 15, 15') is a plastic injection-moulded part.

15. An air vent with blades in accordance with one of claims 6 to 14,
**characterised in that**
the toothed gear (10) and/or the toothed segment (5, 10') is designed in one piece with the locking element (16, 15, 15').

16. An air vent with blades in accordance with one of claims 6 to 15,
**characterised in that**
the toothed gear (10) and/or the toothed segment (5, 10') is placed on the drive shaft (2) or the driven shaft (3, 3') in a positive lock.

17. A ventilation system, in particular for a motor vehicle,
**characterised by**
an air vent with blades (L) in accordance with one of claims 1 to 16.

## Revendications

1. Aérateur à lamelles comprenant au moins un élément de réglage pouvant être actionné au moyen d'un entraînement pour le réglage d'un flux d'air, en particulier pour un système d'aération d'un véhicule automobile, l'élément de réglage présentant une pluralité de lamelles (H ou V), au moins un autre élément de réglage (V et H ou K) pouvant être actionné par l'entraînement de l'élément de réglage, **caractérisé en ce que** les éléments de réglage (H, V, K) sont entraînés au moyen d'un dispositif de transmission (1) par l'intermédiaire d'un arbre d'entraînement (2) et respectivement d'un arbre de sortie (3, 3'), le dispositif de transmission (1) étant formé par un engrenage, lequel présente au moins une roue dentée et/ou un segment de dent (5) disposé sur l'arbre d'entraînement (2) et une roue dentée (10) et/ou un segment de dent (10') disposé sur l'arbre de sortie (3, 3').

2. Aérateur à lamelles selon la revendication 1, **caractérisé en ce que** l'autre élément de réglage est un clapet d'obturation (4).

3. Aérateur à lamelles selon la revendication 1 ou 2, **caractérisé en ce que** l'autre élément de réglage présente d'autres lamelles (V et H), lesquelles sont disposées transversalement et dans le sens d'écoulement d'air décalées par rapport aux lamelles (H ou V).

4. Aérateur à lamelles selon l'une quelconque des revendications précédentes, **caractérisé en ce qu'**au moins une partie de lamelles (V) peut être répartie en éventail.

5. Aérateur à lamelles selon la revendication 4, **caractérisé en ce qu'**il est prévu un clapet d'obturation à l'aide duquel l'air réparti en éventail peut être étranglé.

6. Aérateur à lamelles selon l'une quelconque des revendications précédentes, **caractérisé en ce que** sur l'arbre d'entraînement (2) et sur l'arbre de sortie (3, 3') est prévu au moins à chaque fois un élément d'encliquetage (16, 15, 15'), qui permet un encliquetage de l'arbre de sortie (3, 3') lorsque l'arbre d'entraînement tourne.

7. Aérateur à lamelles selon la revendication 6, **caractérisé en ce que** l'élément d'encliquetage (16, 15, 15') présente un segment de disque (8, 14, 14').

8. Aérateur à lamelles selon la revendication 6 ou 7, **caractérisé en ce que** l'élément d'encliquetage (16, 15, 15') est disposé dans la direction axiale décalé par rapport à la roue dentée (10) ou au segment de dent (5, 10').

9. Aérateur à lamelles selon l'une quelconque des revendications 6 à 8, **caractérisé en ce que** l'élément d'encliquetage (16) présente une zone (7) en forme de disque avec un bord dépassant sur une partie du pourtour.

10. Aérateur à lamelles selon la revendication 9, **caractérisé en ce que** l'élément d'encliquetage (16) est disposé sur l'arbre d'entraînement (2).

11. Aérateur à lamelles selon l'une quelconque des revendications 6 à 10, **caractérisé en ce que** l'élément d'encliquetage (15) présente un disque (12) avec une découpe (13), la découpe (13) étant incurvée vers le centre du disque (12).

12. Aérateur à lamelles selon l'une quelconque des revendications 6 à 11, **caractérisé en ce que** l'élément d'encliquetage (15') présente une zone (12') saillante avec une zone (13') en forme de découpe et incurvée.

13. Aérateur à lamelles selon la revendication 11 ou 12, **caractérisé en ce que** l'élément d'encliquetage (15, 15') est disposé sur l'arbre de sortie (3, 3').

14. Aérateur à lamelles selon l'une quelconque des revendications 6 à 13, **caractérisé en ce que** la roue dentée (10) et/ou le segment de dent (5, 10') et/ou l'élément d'encliquetage (16, 15, 15') est une pièce moulée injectée en plastique.

15. Aérateur à lamelles selon l'une quelconque des revendications 6 à 14, **caractérisé en ce que** la roue dentée (10) et/ou le segment de dent (5, 10') est conçu d'une seule pièce avec l'élément d'encliquetage (16, 15, 15').

16. Aérateur à lamelles selon l'une quelconque des revendications 6 à 15, **caractérisé en ce que** la roue dentée et/ou le segment de dent (5, 10') et/ou l'élément d'encliquetage (16, 15') est emboîté sur l'arbre d'entraînement (2) ou l'arbre de sortie (3'), une liaison par complémentarité de formes étant prévue.

17. Système d'aération, en particulier pour un véhicule automobile, **caractérisé par** un aérateur à lamelles (L) selon l'une quelconque des revendications 1 à 16.
